Europäisches Patentamt

European Patent Office

Office européen des brevets

(19)

(11) Veröffentlichungsnummer: **0 244 590 B1**

# EUROPÄISCHE PATENTSCHRIFT

(12)

(45) Veröffentlichungstag der Patentschrift: 07.08.91

(51) Int. Cl.⁵: **B65G 45/00**

(21) Anmeldenummer: 87103237.1

(22) Anmeldetag: 06.03.87

(54) Abstreifvorrichtung zum Reinigen von Förderbändern.

(30) Priorität: 12.03.86 DE 3608193

(43) Veröffentlichungstag der Anmeldung:
11.11.87 Patentblatt 87/46

(45) Bekanntmachung des Hinweises auf die
Patenterteilung:
07.08.91 Patentblatt 91/32

(84) Benannte Vertragsstaaten:
AT BE DE ES FR GB GR IT NL SE

(56) Entgegenhaltungen:
EP-A- 0 090 985
EP-A- 0 094 021
DE-A- 3 402 407

(73) Patentinhaber: VSR Engineering GmbH Fördertechnik
Hingbergstrasse 319
W-4330 Mülheim/Ruhr(DE)

(72) Erfinder: Rappen, Albert, Dipl.-Ing.
Karlsruher Strasse 87
W-4330 Mülheim/Ruhr(DE)

(74) Vertreter: Schneider, Wilhelm, Dipl.-Phys.
Danziger Weg 9
W-3052 Bad Nenndorf(DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist eine Abstreifvorrichtung von Förderbändern mit einer unterhalb des betreffenden Förderbandes über die Bandbreite angeordneten Lagerachse für darauf montierbare Federarme mit einer Montagevorrichtung an einem Ende zum Anschluß an die Lagerachse und am anderen Ende mit einem Schabeblatthalter für Schabeblätter, welche in vorgegebener Anstellung gegen das Förderband angedrückt sind.

Es sind Abstreifvorrichtungen zum Reinigen von Förderbändern bekannt, bei welchen die an den Enden der Federarme starr befestigten Schabeblätter in stechender Anstellung gegen das Untertrum des vorlaufenden Förderbandes angedrückt sind, (DE-A 3 402 407). Stechende Anstellung mit nach hinten und unten elastisch sich verdrehendem Schabeblatt und einer Drehachse im wesentlichen unterhalb der Abstreifkante ist insbesondere deshalb problematisch, weil infolge unterschiedlicher Reib- und Abstreifkräfte durch Bandgeschwindigkeit, Oberflächenrauhigkeit oder Materialanklebung und -menge ein sogenannter stick-slip-Effekt zwischen Schabeblatt und Bandoberfläche auftritt, aus dem Rattermarken und schließlich Bndbeschädigungen resultieren. - Um diese Nachteile zu vermeiden und eine möglichst bandschonende Reinigungswirkung zu erzielen, wurde daher schon eine schleppende Anstellung für die Schabeblätter verwirklicht, die sich mit einem sie haltenden Federarm um eine Drehachse verdrehen. Bei Reversierbändern wird diese schleppende Anstellung jedoch zu einer stechenden Anstellung mit den erläuterten Nachteilen, wenn das betreffende Förderband in umgekehrter Richtung läuft, also zurückläuft, falls nicht durch ein zusätzliches Gelenk ein Zurückkippen das Schabeblattes ermöglicht wird < (EP-A-94 021 ) >. Ein weiterer Nachteil bei den bekannten Abstreifvorrichtungen ist darin zu sehen, daß die Federarme regelmäßig als Torsions-Federarme ausgebildet sind, d.h. unter Zwischenschaltung von Torsionsfedern an die Montsgevorrichtung für die Lagerarme angeschlossen sind. Insoweit handelt es sich um eine verhältnismäßig komplizierte Bauweise, welche Vormontagen aus einzelnen Bauteilen erforderlich macht.

Es ist schließlich auch eine Abstreifvorrichtung bekannt, bei der die Haltevorrichtung der Federarme und das abstreifende Schabeblatt aus verschleißfestem, elastischen und homogenen Polyurethan bestehen. Durch elastisches Verbiegen des Federarmes entsteht die Anpreßkraft für das Schabeblatt. Der Nachteil dieser Ausführungsform besteht darin, daß der Werkstoff einen Kompromiß zwischen dem Verschleiß- und Abstreifverhalten und der Federwirkung darstellt, die infolge bleibender Verformung nachläßt. Bei Verschleiß des Schabeblattes muß das ganze Abstreifelement ersetzt werden. - Sämtlichen bekannten Abstreifvorrichtungen ist der Nachteil gemeinsam, daß sich die Anstellwinkel des Schabeblattes infolge Verschleiß oder wechselnder Abstreifkonturlinien laufend verändern und dadurch keine optimale Reinigung erreicht wird.

Der Erfindung liegt die Aufgabe zugrunde, eine Abstreifvorrichtung zum Reinigen von Förderbändern, insbesondere Reversierbändern, der eingangs beschriebenen Art zu schaffen, die sich sowohl bei vorlaufendem als auch bei rücklaufendem Förderband durch optimale und bandschonende Reinigungswirkung sowie geringen Schabeblattverschleiß auszeichnen, darüber hinaus durch einen in fertigungstechnischer, montagtechnischer und konstruktiver Hinsicht besonders einfachen Aufbau.

Diese Aufgabe löst die Erfindung bei einer gattungsgemäßen Abstreifvorrichtung dadurch, daß die aus einem Obergurt und einem parallelen dazu liegendem Untergurt gebildeten Federarme aus federelastischem Werkstoff bestehen und in vertikaler Anstellung gegen das Untertrum angedrückt sind, wobei der Anstellwinkel der Schabeblätter in Vorlauf-Anstellung bis zu 10 Grad zur Vertikalen auf das Förderband beträgt. -Diese Maßnahmen der Erfindung haben zur Folge, daß aufgrund der federelastischen Federarme auf die Zwischenschaltung sonst erforderlicher Torsionsfedern verzichtet werden kann. Darüber hinaus läßt sich die Elastizität der Federar unschwer so einstellen, daß das Andrücken der abstreifenden Schaberblätter im wesentlichen senkrecht gegen das Förderband erfolgt und bei zurücklaufendem Förderband das Schabeblatt infolge Verbiegung der aus Obergurt und Untergurtes gebildeten Federarme in schleifende Stellung zum Förderband abkippt. Optimal Ergebnisse stellen sich bei einem 150 mm breiten Schabeblatt, einer Anpreßkraft von 50 bis 150 N und einem Federweg von 20 mm ein.

Weitere Merkmale sind im folgenden aufgeführt, So können die Federarme, die Montagevorrichtung, und die Schabeblatthalter jeweils eine homogene Baueinheit aus hochfestem Kunststoff ggf. mit Faserverstärkung oder Federstahlverstärkung bilden. Der Erfindungsgegenstand ist auch erfüllt, wenn lediglich die Montagevorrichtung und die Schabeblatthalter aus Kunststoff ausgebildet sind und die aus Obergurt und Untergurt gebildeten Federarme aus Federstahl bestehen. Die Ausführungsform in Kunstst ist in fertigungstechnischer Hinsicht besonders einfach, weil sie in einem Spritzwerkzeug hergestellt werden kann. Aufgrund der exakten Fertigungsweise mittels eies Spritzwerkzeuges können die Federarme bzw. Schabeblätter dicht bei dicht nebeneinander angeordnet werden, brauchen also nicht versetzt zu werden.

Obergurt und Untergurt können jeweils aus mindestens zwei einzelnen Positionen bestehen. Diese Ausführungsform gewährleistet, daß selbst bei hoher Elastizität und Störkrafteinflüssen durch Bandbeschädigungen oder Verschleißerscheinungen die Stellung des Schabeblattes gegen das Untertrum des Förderbandes stets erhalten bleibt. Konstante Winkelstellung zum Förderblatt reduziert den Schabeblattverschleiß und steigert die Reinigungswirkung. Vorzugsweise weisen Obergurt und Untergurt unterschiedliche Länge und/oder Elastizität auf, so daß sie sich bei Extrembelastungen, insbesonder auch bei rückwärtslaufendem Förderband, verschieden verformen und das Schabeblatt seine Winkelstellung allenfalls so zum Förderband verändert, daß es leichter abgleitet und weniger dazu neigt, sich festzufahren.

Die Montagevorrichtung kann als vertikaler Doppelsteg mit Querbohrungen zur Aufnahme von Befestigungs- bzw. Steckbolzen ausgebildet sein. Nach einer anderen Ausführungsform empfiehlt die Erfindung, daß die Montagevorrichtung als eine die Lagerachse zumindestens teilweise umfassende Schelle mit Zapfen, Bohrungen, Stegen und/oder Nuten ausgebildet ist, wobei also die Zapfen der Schelle in entsprechende Bohrungen der Lagerachse bzw. die Stege der Schelle in entsprechende Nuten der Lagerachse oder umgekehrt eingreifen. Bei der Verwirklichung von Stegen oder Nuten lassen sich die Federarme bzw. Abstreifer unschwer auf der Lagerachse in der jeweils gewünschten Stellung positionieren. Vorzugsweise ist die Montagevorrichtung als federnde Halbschelle mit innenseitig sich gegenüberliegenden Nuten, Stegen, Zapfen oder Bohrungen ausgebildet, welche eben in entsprechende Längsstege, Längsnuten, Bohrungen oder Zapfen der Lagerachse eingreifen. Ferner können der Federarm und/oder die Montagevorrichtung in beanspruchungskritischen Bereichen Verstärkungseinlagen aus Metall und/oder Schwächungszonen aufweisen, um die Stabilität oder Federwirkungen zu erhöhen. Sie können auch gamz aus vorzugsweise federndem Stahl bestehen. Der Erfindungsgedanke ist auch erfüllt wenn die Halbschelle die Achse mehr als 180 Grad umschließt und nur einseitig Nuten, Bohrungen, Stege oder Zapfen besitzt. - Weiter sieht die Erfindung vor, daß die Lagerachse als C-Profil mit einem nach unten ausgerichteten Montageschlitz ausgebildet ist und die Montagevorrichtung eine von unten in den Montageschlitz eingreifende Arretierungsvorrichtung, z.B. eine Klammer oder einen Knebel aufweist, der durch Verdrehen lösbar oder arretierbar ist. Dadurch wird ein einwandfreier Sitz der Montageschelle und folglich des betreffenden Abstreifers auf der Lagerachse erreicht. Die Montagevorrichtung wird auch auf der Achse gehalten, wenn die Zapfen am Ende Verdickungen besitzen und die Gegenseite ein Langloch mit einer der Verdickung entsprechenden Aufweitung aufweist. - Erfindungsgemäß weisen die Schabeblatthalter Einsteck- bzw. Aufstecknuten und die Schabeblätter entsprechende Einsteck- oder Aufsteckfedern auf und sind dadurch auf die Schabeblatthalter ein- bzw. aufsteckbar. Dadurch lassen sich die Schabeblätter unschwer austauschen.

Im einzelnen haben die Schabeblätter eine umgekehrt U-förmige Ausnehmung, wobei die U-Schenkel die Einsteck- oder Aufsteckfedern bilden, während die Schabeblatthalter 3 bis 10 mm breite Nuten mit einer oberen Querkante aufweisen, so daß die eingesteckten bzw. aufgesteckten Schabeblätter sowohl Vertikalkräfte als auch Biegemomente aufnehmen können. In diesem Zusammenhang lehrt die Erfindung, daß die Schabeblatthalter Rastnasen oder die Schabeblätter Rastausnehmungen oder umgekehrt aufweisen und dadurch die ein- bzw. aufgesteckten Schabeblätter automatisch in gesteckter Position arretierbar sind, also aus dem Schabeblatthalter nicht herausfallen können. Grundsätzlich können die Schabeblätter aus Stahl, Hartmetall, Polyurethan oder Keramik bestehen. Nach bevorzugter Ausführungsform der Erfindung ist vorgesehen, daß die Schabeblätter als Stahlblätter mit einer Schabeleiste aus Oxidkeramik ausgebildet sind, weil infolge der im Rahmen der Erfindung erzielten, im wesentlichen vertikalen Anstellung gegen das Untertrum des Förderbandes extrem geringer Verschleiß und schonende Behandlung bei einwandfreier Reinigungswirkung erzielt werden. - Darin sind die wesentlichen durch die Erfindung erreichten Vorteile zu sehen.

Im folgenden wird die Erfindung anhand einer lediglich ein Ausführungbeispiel darstellenden Zeichnung erläutert; es zeigen:

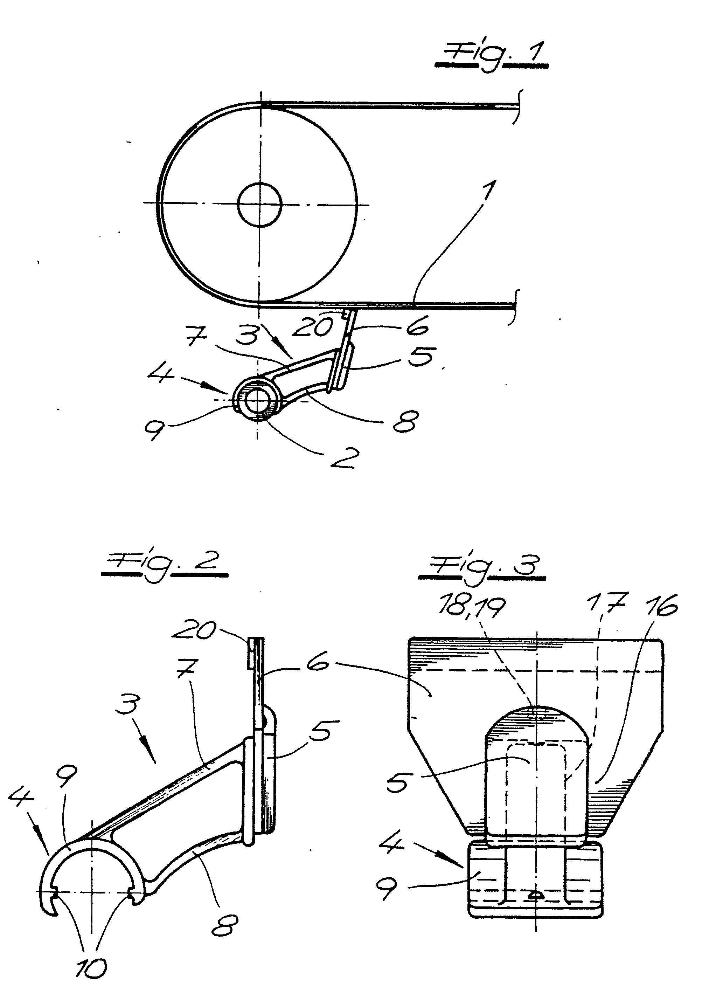

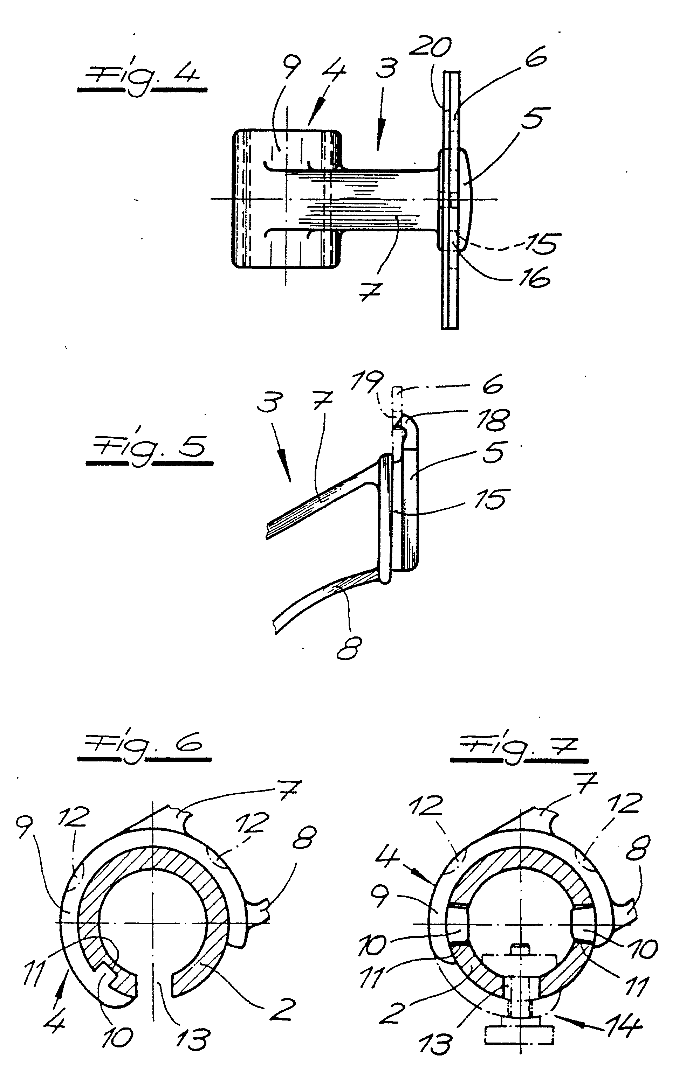

Fig. 1    eine erfindungsgemäße Abstreifvorrichtung mit Umlenktrommel und Förderband in schematischer Seitenansicht,

Fig. 2    einen Abstreifer für den Gegenstand nach Fig. 1 in Seitenansicht,

Fig. 3    den Gegenstand nach Fig. 2 in Frontansicht,

Fig. 4    den Gegenstand nach Fig. 2 in Draufsicht,

Fig. 5    einen Schabeblatthalter für den Gegenstand nach Fig. 2,

Fig. 6 u. 7    abgewandelte Ausführungsformen einer Montagevorrichtung für den Gegenstand nach Fig. 2.

In den Figuren ist eine Abstreifvorrichtung zum Reinigen von Förderbändern, insbesondere Reversierbändern, dargestellt, mit einer unterhalb des betreffenden Förderbandes 1 über die Bandbreite angeordneten Lagerachse 2 für darauf montierbare Federarme 3 mit an einem Ende der Montagevorrichtung 4 zum Anschluß an die Lagerachse 2 und am anderen Ende Schabeblatthalter 5 für Schabeblätter 6, welche in vorgegebener Anstellung gegen das Untertrum des Förderbandes 1 angedrückt sind. Die Federarme 3 bestehen aus federelstischem Werkstoff und sind in vertikaler Anstellung gegen das Untertrum angedrückt, wobei der Anstellwinkel in Vorlauf-Anstellung der Schabeblätter 6 allenfalls bis zu 10 Grad beträgt. Die Federarme 3, die Montagevorrichtungen 4 und die Schabeblatthalter 5 bilden jeweils eine homogene Baueinheit aus z. B. Kunststoff oder Federstahl. Die Federarme 3 zwischen Montagevorrichtung 4 und Schabeblatthalter 5 sind jeweils von einem Obergurt 7 und einem im wesentlichen parallel dazu verlaufenden Untergurt 8 gebildet, wobei sich der Schabeblatthalter 5 mit dem betreffenden Schabeblatt 6 in im wesentlichen vertikaler Position anschließt. Obergurt 7 und Untergurt 8 weisen unterschiedliche Länge auf, und können auch hinsichtlich der Elastizität und des Querschnitts unterschiedlich eingestellt sein. Bei dem Ausführungsbeispiel ist der Untergurt 8 kürzer als der Obergurt 7. Nach einer abgewandelten Ausführungsform können Obergurt 7 und Untergurt 8 jeweils auch von einzelnen oder mehreren Federstahlstäben gebildet oder es können solche Federstahlstäbe in Gurtmaterial eingebettet, bei der Kunststoff-Ausführungsform eingegossen sein.

Die Montagevorrichtung 4 kann als vertikaler Doppelsteg mit Querbohrungen zur Aufnahme von Befestigungsbolzen ausgebildet sein, was nicht gezeigt ist. Dargestellt ist vielmehr eine Ausführungsform, wonach die Montagevorrichtung 4 als die Lagerachse 2 zumindest teilweise umfassende Schelle nit Zapfen, Bohrungen, Stegen 10 und/oder Nuten ausgebildet ist. Bevorzugt handelt es sich bei der Montagevorrichtung 4 um eine Halbschelle 9 mit innenseitig sich gegenüberliegenden Stegen 10 oder Zapfen, welche in entsprechende Längsnuten 11 oder Bohrungen der Lagerachse 2 eingreifen. Die Federarme 3 und/oder die Montagevorrichtung 4 können in beanspruchungskritischen Bereichen Verstärkungseinlagen aus Metall und/oder angedeutete Schwächungszonen 12 zur Erhöhung der Stabilität bzw. Federwirkung aufweisen. Die Lagerachse 2 ist als C-Profil mit einem nach unten ausgerichteten Montageschlitz 13 ausgebildet. Die Montagevorrichtung 4 weist eine von unten in in den Montageschlitz 13 eingreifende Arretiervorrichtung 14, z.B. eine Klammer oder einen Knebel auf, der durch Verdrehen lösbar arretierbar ist, was lediglich angedeutet ist. Ferner besitzt der Schabeblatthalter 5 Einsteck- bzw. Aufstecknuten 15 und weisen die Schabeblätter 6 entsprechende Einsteck- oder Aufsteckfedern 16 auf, wodurch eine Steckverbindung zwischen Schabeblatthalter 5 und Schabeblatt 6 erreicht wird. Bei der dargestellten Ausführungsform weist das Schabeblatt 6 eine umgekehrte U-förmige Ausnehmung 17 auf, deren U-Schenkel die Ein-bzw. Aufsteckfedern 16 bilden. Außerdem ist vorgesehen, daß die Schabeblatthalter 5, Rastnasen 18 und die Schabeblätter 6 Rastausnehmungen 19 oder umgekehrt aufweisen, wodurch die Schabeblätter 6 in ein- bzw. aufgesteckter Position arretierbar sind. Die Schabeblätter 6 können als Stahlblätter mit einer Schabeleiste aus Oxidkeramik ausgebildet sein. - Nach einem abgewandelten Ausführungsbeispiel, welches nicht gezeichnet ist, kann sich die Schabeleiste aus Oxidkeramik 20 auf einem Absatz im Schabeblatt 6 abstützen und/oder mindestens zwei punktförmige Erhöhungen oder Vertiefungen bzw. in Längsrichtung verlaufende Federn oder Nuten aufweisen, welche in entsprechende Vertiefungen oder Erhöhungen im Schabeblatt 6 eingreifen. Dadurch wird eine formschlüssige Verbindung zwischen der Schabeleiste 20 und dem Schabeblatt 6 erreicht, welche zur Aufnahme von Schubkräften geeignet ist. Dadurch wird verhindert, daß sich die Schabeleiste bei extremen Vibrations- und/oder Thermobeanspruchungen lösen kann.

## Patentansprüche

1. Abstreifvorrichtung zum Reinigen von Förderbändern mit einer unterhalb des betreffenden Förderbandes über die Bandbreite angeordneten Lagerachse (2) für darauf montierbare Federarme (3) mit einer Montgevorrichtung (4) an einem Ende zum Anschluß an die Lagerachse und am anderen Ende mit einem Schabeblatthalter (5) für Schabeblätter (6), welche in vorgegebener Anstellung gegen das Förderband angedrückt sind, **dadurch gekennzeichnet,** daß die aus im wesentlichen einem Obergurt (7) und einem parallel dazu liegendem Untergurt (8) gebildeten Federarme (3) aus federelastischem Werkstoff bestehen und in im wesentlichen vertikaler Anstellung gegen das Untertrum angedrückt sind, wobei der Anstellwinkel der Schabeblätter (6) in Vorlauf-Anstellung bis zu 10 Grad zur Vertikalen auf das Förderband (11) beträgt.

2. Abstreifvorrichtung nach Anspruch 1, **dadurch gekennzeichnet,** daß die Federarme (3), die Montgevorrichtungen (4) und die Schabeblatthalter (5) jewels eine homogene Baueinheit aus beispielsweise Kunststoff, Kunststoff mit Federstahleinlage oder Federstahl bilden.

3. Abstreifvorrichtung nach Anspruch 1 oder 2, **dadurch gekennzeichnet,**

daß sich an die im wesentlichen aus Obergurt (7) und Untergurt (8) gebildeten Federarme (3) der Schabeblatthalter (5) mit dem betreffenden Schabeblatt (6) in vertikaler Position anschließt.

4. Abstreifvorrichtung nach einem der Ansprüche 1 bis 3,
   **dadurch gekennzeichnet,**
   daß Obergurt (7) und Untergurt (8) unterschiedliche Länge und/oder Elastizität aufweisen und/oder jeweils aus mehr als einem Profil bestehen.

5. Abstreifvorrichtung nach einem der Ansprüche 1 bis 4,
   **dadurch gekennzeichnet,**
   daß Obergurt (7) und Untergurt (8) von Federstahlstäben gebildet oder solche Federstahlstäbe in das Material der Montagevorrichtung (4) und Schabeblätter (6) eingebetttet sind.

6. Abstreifvorrichtung nach einem der Ansprüche 1 bis 5,
   **dadurch gekennzeichnet,**
   daß die Montagevorrichtung (4) als Doppelsteg mit Querbohrungen zur Aufnahme von Befestigungsbolzen ausgebildet ist.

7. Abstreifvorrichtung nach einem der Ansprüche 1 bis 5,
   **dadurch gekennzeichnet,**
   daß die Montagevorrichtung (4) als die Lagerachse zumindest teilweise elastisch umfassende Schelle mit Zapfen, Bohrungen, Stegen (10) oder Nuten ausgebildet ist, welche in entsprechende Längsstege oder Längsnuten (11) und Bohrungen oder Zapfen der Lagerachse (2) eingreifen.

8. Abstreifvorrichtung nach einem der Ansprüche 1 bis 5 oder 7,
   **dadurch gekennzeichnet,**
   daß die Montagevorrichtung (4) als elastische Halbschelle (9) mit innenseitig sich gegenüberliegenden Nuten oder Stegen (10) und Zapfen oder Bohrungen ausgebildet ist, welche in entsprechende Längsstege oder Längsnuten (11) und Bohrungen oder Zapfen der Lagerachse (2) eingreifen.

9. Abstreifvorrichtung nach einem der Ansprüche 1 bis 8,
   **dadurch gekennzeichnet,**
   daß der Federarm (3) und/oder die Montagevorrichtung (4) in beanspruchungskritischen Bereichen Verstärkungseinlagen und/oder Schwächungszonen (12) aufweisen.

10. Abstreifvorrichtung nach einem der Ansprüche 1 bis 9,
    **dadurch gekennzeichnet,**
    daß die Lagerachse (2) als C-Profil mit einem nach unten ausgerichteten Montageschlitz (13) ausgebildet ist und die Montagevorrichtung (4) eine von unten in den Montageschlitz (13) eingreifende Arretiervorrichtung (14), z.B. eine Klammer oder einen Knebel aufweist, der durch Verdrehen lösbar oder arretierbar ist.

11. Abstreifvorrichtung nach einem der Ansprüche 1 bis 10,
    **dadurch gekennzeichnet,**
    daß die Schabeblatthalter (5) Einsteck- bzw. Aufstecknuten (15) und die Schabeblätter (6) entsprechende Einsteck- oder Aufsteckfedern (16) aufweisen und dadurch auf die Schabeblätter (5) ein- bzw. aufsteckbar sind.

12. Abstreifvorrichtung nach einem der Ansprüche 1 bis 11,
    **dadurch gekennzeichnet,**
    daß die Schabeblatthalter (5) federnd einrastende Rastnasen (18) und die Schabeblätter (6) in ein- bzw. aufgesteckter Position arretierbar sind.

13. Abstreifvorrichtung nach einem der Ansprüche 1 bis 12,
    **dadurch gekennzeichnet,**
    daß die Schabeblätter (6) als Stahlblätter mit einer aufgeklebten oder eingeklemmten Schabeleiste aus Oxidkeramik (20) ausgebildet sind.

14. Abstreifvorrichtung nach einem der Ansprüche 1 bis 13.
    **dadurch gekennzeichnet,**
    daß die Schabeblatthalter (5) soviel Spiel gegenüber den Schabeblättern (6) aufweisen, daß das jeweilige Schabeblatt (6) um mindestens +/- 10 Grad quer zur Bandlaufrichtung verdrehbar ist.

15. Abstreifvorrichtung nach einem der Ansprüche 1 bis 14,
    **dadurch gekennzeichnet,**
    daß sich die Schabeleiste aus Oxidkeramik (20) auf einem Absatz im Schabeblatt (6) abstützt und/oder mindestens zwei punktförmige Erhebungen oder Vertiefungen bzw. in Längsrichtung verlaufende Nuten oder Federn aufweist, welche in entsprechende Vertiefungen oder Erhöhungen im Schabeblatt eingreifen.

## Claims

1. Stripping-off device for cleaning conveyor belts, with a bearing shaft (2), arranged underneath the conveyor belt in question over the width of the belt, for spring arms (3), which can be mounted thereon, with a mounting device (4) at one end for connection to the bearing shaft and with a scraping-blade holder (5) at the other end for scraping blades (6) which are pressed against the conveyor belt in a predetermined setting, characterized in that the spring arms (3), formed essentially from an upper flange (7) and a lower flange (8) lying parallel thereto, consist of resilient material and are pressed against the lower side in an essentially vertical setting, the angle at which the scraping blades (6) are set in the forward setting being up to 10 degrees to the vertical to the conveyor belt (1).

2. Stripping-off device according to Claim 1, characterized in that the spring arms (3), the mounting devices (4) and the scraping-blade holders (5) in each case form a homogeneous structural unit made from, for example, plastic, plastic with a spring-steel insert or spring steel.

3. Stripping-off device according to Claim 1 or 2, characterized in that the scraping-blade holder (5) with the scraping blade (6) in question is connected to the spring arms (3), formed essentially from upper flange (7) and lower flange (8), in a vertical position.

4. Stripping-off device according to one of Claims 1 to 3, characterized in that upper flange (7) and lower flange (8) have different lengths and/or elasticities, and/or in each case consist of more than one profile.

5. Stripping-off device according to one of Claims 1 to 4, characterized in that upper flange (7) and lower flange (8) are formed from spring-steel bars or such spring-steel bars are embedded into the material of the mounting device (4) and scraping blades (6).

6. Stripping-off device according to one of Claims 1 to 5, characterized in that the mounting device (4) is designed as a double web with transverse bores for receiving fastening bolts.

7. Stripping-off device according to one of Claims 1 to 5, characterized in that the mounting device (4) is designed as a shell surrounding the bearing shaft at least partially in an elastic manner and having pegs, bores, webs (10) or grooves which engage in corresponding longitudinal webs or longitudinal grooves (11) and bores or pegs of the bearing shaft (2).

8. Stripping-off device according to one of Claims 1 to 5 or 7, characterized in that the mounting device (4) is designed as an elastic half-shell (9) with internally mutually opposite grooves or webs (10) and pegs or bores which engage in corresponding longitudinal webs or longitudinal grooves (11) and bores or pegs of the bearing shaft (2).

9. Stripping-off device according to one of Claims 1 to 8, characterized in that the spring arm (3) and/or the mounting device (4) have strengthening inserts and/or zones of weakness (12) in critical regions of stress.

10. Stripping-off device according to one of Claims 1 to 9, characterized in that the bearing shaft (2) is designed as a C-profile with a downward pointing mounting slit (13), and the mounting device (4) has a locking device (14) which engages from below in the mounting slit (13) and is, for example, a clamp or a toggle which can be released or locked by rotation.

11. Stripping-off device according to one of Claims 1 to 10, characterized in that the scraping-blade holders (5) have push-in or push-on grooves (15), and the scraping blades (6) corresponding push-in or push-on tongues (16) and can thus be pushed into or onto the scraping-blade holders (5).

12. Stripping-off device according to one of Claims 1 to 11, characterized in that the scraping-blade holders (5) have resiliently snap-engaging snap catches (18), and the scraping blades (6) can be locked in a pushed-in or pushed-on position.

13. Stripping-off device according to one of Claims 1 to 12, characterized in that the scraping blades (6) are designed as steel blades with an oxide ceramic, adhesively bonded or pinch-fitted scraping strip (20).

14. Stripping-off device according to one of Claims 1 to 13, characterized in that the scraping-blade holders (5) have a degree of play relative to the scraping blades (6) such that the respective scraping blade (6) can be rotated by at least +/- 10 degrees transverse to the running direction of the belt.

15. Stripping-off device according to one of Claims 1 to 14, characterized in that the oxide ceramic scraping strip (20) is supported on a shoulder in the scraping blade (6) and/or has at least two punctiform protuberances or recesses, or grooves or tongues running in the longitudinal direction, which engage in corresponding recesses or raised parts in the scraping blade.

## Revendications

1. Dispositif de raclage permettant de nettoyer les bandes transporteuses avec un axe de palier (2) disposé au-dessous de la bande transporteuse, sur la largeur de la bande pour des bras élastiques (3), avec un mécanisme d'assemblage (4), à une extrémité pour son raccordement à l'axe de palier, et à l'autre extrémité à un support de lame de raclage (5) pour lames de raclage (6) ; qui sont appliquées contre la bande transporteuse dans une position déterminée, dispositif caractérisé en ce que les bras élastiques (3) constitués essentiellement d'une semelle supérieure (7) et d'une semelle inférieure (8), parallèles entre elles, sont constitués d'un matériau élastique déformable et sont appliqués sensiblement en position verticale contre la partie inférieure (de la bande transporteuse), l'angle d'incidence des lames de raclage (6), sur la bande transporteuse s'élevant à environ 10 degrés par rapport à la verticale, en position de déroulement de la bande transporteuse.

2. Dispositif de raclage selon la revendication 1, caractérisé en ce que les bras élastiques (3), le mécanisme d'assemblage (4) et le support de la lame de raclage (5) constituant chacun une pièce homogène par exemple en matière plastique, en matière plastique avec un support en acier élastique, ou acier élastique.

3. Dispositif de raclage selon les revendications 1 ou 2, caractérisé en ce que le support de la lame de raclage (5) avec la lame de raclage (6) se raccorde en position verticale sur les bras élastiques (3) formés essentiellement par une semelle supérieure (7) et une semelle inférieure (8).

4. Dispositif de raclage selon l'une quelconque des revendications 1 à 3, caractérisé en ce que la semelle supérieure (7) et la semelle inférieure (8) présentent des longueurs différentes et/ou une élasticité différente et/ou sont constituées chacune de plus d'un profilé.

5. Dispositif de raclage selon l'une quelconque des revendications 1 à 4, caractérisé en ce que la semelle supérieure (7) et la semelle inférieure (8) constituées par des barres d'acier élastiques ou bien des barres d'acier élastiques de ce type sont encastrées dans le matériau du mécanisme d'assemblage (4) et des lames de raclage (6).

6. Dispositif de raclage selon l'une quelconque des revendications 1 à 5, caractérisé en ce que, le mécanisme d'assemblage (4) est constitué par un double montant avec des perçages transversaux permettant de recevoir les boulons d'assemblage.

7. Dispositif de raclage selon l'une quelconque des revendications 1 à 6, caractérisé en ce que le mécanisme d'assemblage(4) comme l'étrier de fixation entourant au moins partiellement de façon élastique l'axe de palier, est constitué de broches, de perçages, de traverses (10) ou de rainures, ces derniers s'engageant dans les traverses longitudinales, ou bien dans les rainures longitudinales (11) et les perçages ou les broches de l'axe de palier (2).

8. Dispositif de raclage selon l'une quelconque des revendications 1 à 5 ou à la revendication 7, caractérisé en ce que le mécanisme d'assemblage (4) est formé comme un demi-étrier de fixation (9) élastique avec à l'intérieur des rainures ou des traverses (10) et des broches ou de perçages se faisant face, ces derniers s'engageant dans les traverses longitudinales ou les rainures longitudinales (11) et les perçages ou les broches de l'axe de support (2).

9. Dispositif de raclage selon l'une quelconque des revendications 1 à 8, caractérisé en ce que le bras élastique (3) et/ou le mécanisme d'assemblage (4) présentent aux endroits critiques de sollicitation des garnitures de renforcement métallique et/ou des zones d'affaiblissement (12).

10. Dispositif de raclage selon l'une quelconque des revendications 1 à 9, caractérisé en ce que l'axe de palier (2) est formé comme un profilé en C avec une fente de montage (13) tournée vers le bas, et que le mécanisme d'assemblage (4) présente un dispositif de blocage (14) s'engageant par le bas dans la fente de montage (13), comme par exemple une clavette ou une goupille, qui par torsion est enfichable ou est susceptible de relâchement.

11. Dispositif de raclage selon l'une quelconque des revendications 1 à 10, caractérisé en ce que le support de la lame de raclage (5) présente des rainures d'enfichage ou respectivement de relâchement, et que les lames de raclage (6) présentent des languettes d'enfichage ou de relâchement correspondantes, comme les lames de raclage.

12. Dispositif de raclage selon l'une quelconque des revendications 1 à 11, caractérisé en ce que les supports de la lame de raclage (5) verrouillant de façon élastique les cliquets (18), et les lames de raclage (6) sont blocables en position d'encliquetage ou respectivement en position relâchement.

13. Dispositif de raclage selon l'une quelconque des revendications 1 à 12, caractérisé en ce que les lames de raclage (6) présentent un listeau de raclage en matériau céramique oxydé (20), collée sur la lame ou insérée dans la lame.

14. Dispositif de raclage selon l'une quelconque des revendications 1 à 13, caractérisé en ce que les supports de lame de raclage (5) présentent par rapport aux lames de raclage (6) suffisamment de jeu pour permettre que la lame de raclage correspondante puisse pivoter d'au moins +/-10 degrés transversalement à la direction du déroulement de la bande.

15. Dispositif de raclage selon l'une quelconque des revendications 1 à 14, caractérisé en ce que le listeau de raclage en matériau céramique oxydé s'appuie sur un renforcement de la lame de raclage et/ou présente au moins deux encoches ou rainures ponctuelles ou respectivement des rainures ou des languettes longitudinales, lesquelles s'engagent dans les rainures ou les encoches correspondantes de la lame de raclage.

*Fig. 1*

*Fig. 2*

*Fig. 3*

_Fig.4_

_Fig.5_

_Fig.6_

_Fig.7_